# EUROPÄISCHE PATENTSCHRIFT

(11) **EP 3 525 305 B1**
(45) Veröffentlichungstag und Bekanntmachung des Hinweises auf die Patenterteilung: **07.04.2021**
(21) Anmeldenummer: 19155164.7
(22) Anmeldetag: 01.02.2019
(51) Int. Cl.: H02G 3/22, H02G 15/013, H02G 3/08, F16L 5/10

(54) **KABELDURCHFÜHRANORDNUNG**
CABLE FEEDTHROUGH ASSEMBLY
DISPOSITIF DE PASSAGE DE CÂBLES

(30) Priorität: 09.02.2018 DE 102018103016
(43) Veröffentlichungstag der Anmeldung: 14.08.2019
(73) Patentinhaber: Stabilus GmbH, 56070 Koblenz (DE)
(72) Erfinder: Keßler, Jonathan, 56412 Großholbach (DE); Bochen, Jan, 56337 Eitelborn (DE); Theis, Christof, 56204 Hillscheid (DE); Bochen, Marian, 56337 Eitelborn (DE); Jost, Eduard, 56206 Hilgert (DE); Knopp, Axel, 56337 Eitelborn (DE)
(74) Vertreter: Klein, Thomas

(56) Entgegenhaltungen:
- EP-A2- 1 705 771
- DE-A1- 10 332 035
- US-B1- 6 995 316

## Beschreibung

Die Erfindung bezieht sich auf eine Kabeldurchführanordnung zum abgedichteten Hindurchführen eines Kabels von außen durch eine Einführöffnung in einem Endverschluß einer elektromotorischen Linearstellvorrichtung in einen Gehäuseinnenraum der Linearstellvorrichtung.

Bei derartigen Kabeldurchführanordnungen besteht das Problem, daß ein dichtes Herausführen des Kabels aus dem Gehäuseinnenraum nur schwierig möglich ist.

Aus der US 6 995 316 B1 ist eine Kabeldurchführanordnung bekannt, bei der ein Plattenöffnungsteil mit einer durchgehenden Stufenöffnung versehen ist. Dabei ist die große Stufe der Stufenöffnung nach außen gerichtet. In die Stufenöffnung ist ein Kabeldurchführgehäuse eingesetzt und fixiert, durch dessen axial durchgehende Durchgangsöffnung Kabel hindurchgeführt und danach die Durchgangsöffnung von einem Spritzgußmaterial vollkommen ausgespritzt ist. Das Kabeldurchführgehäuse weist an seinem aus der Stufenöffnung herausragenden Bereich einen radial hervorstehenden Flansch auf. Zwischen dem Flansch und dem radialen Verbindungsbereich zwischen großer und kleiner Stufe der Stufenöffnung ist eine elastische Dichtung angeordnet, die mit axialer Vorspannung an dem Flansch und an dem radialen Verbindungsbereich zwischen großer und kleiner Stufe in Anlage ist.

Aufgabe der Erfindung ist es daher eine Kabeldurchführanordnung der eingangs genannten Art zu schaffen, die bei einfachem Aufbau und einfacher Montage ein abgedichtetes Herausführen eines Kabels aus dem Gehäuseinnenraum sowie eine Beurteilung der Dichtstelle von außen ermöglicht.

Diese Aufgabe wird erfindungsgemäß dadurch gelöst, daß die Einführöffnung eine Stufenöffnung ist, die an ihrem dem Gehäuseinnenraum nahen Bereich eine kleine Stufe mit geringerer radialer Erstreckung und in ihrem nach außen mündenden Bereich eine große Stufe mit größerer radialer Erstreckung aufweist, mit einem eine axiale Durchgangsöffnung aufweisenden Verbindungselement, das von außen bis in eine Einbaulage in die Einführöffnung einführbar und in der Einbaulage fixierbar ist, wobei das Verbindungselement in seiner Einbaulage mit einem axialen Zapfenstück durch die kleine Stufe der Stufenöffnung in den Gehäuseinnenraum ragt und mit einem axialen Haltebereich in die große Stufe der Stufenöffnung ragt oder die große Stufe der Stufenöffnung durchragt, sowie mit einer Kabeltülle, durch die das durch die Durchgangsöffnung des Verbindungselements führbare Kabel nach außen führbar ist und die mit ihrem einem Ende den Haltebereich umschließt und mit elastischer Vorspannung radial umlaufend sowohl an der radial umlaufenden Mantelfläche des Haltebereichs als auch an der radial umlaufenden Innenfläche der großen Stufe der Stufenöffnung in Anlage ist, wobei das Kabel zunächst vom Gehäuseinnenraum durch die Einführöffnung des Endverschlusses nach außen und weiter durch die Durchgangsöffnung des Verbindungselements sowie die Kabeltülle hindurchführbar ist.

Bei dieser Ausbildung wird das Kabel zunächst vom Gehäuseinnenraum durch die Einführöffnung des Endverschlusses nach außen und weiter durch die Durchgangsöffnung des Verbindungselements sowie die Kabeltülle hindurchgeführt. Dabei können Verbindungselement und Kabeltülle noch nicht an dem Endverschluß montiert sein. Ist dabei die Kabeltülle noch nicht an dem Verbindungselement angeordnet, so erfolgt dies nun. Danach wird das Verbindungselement in die Stufenbohrung bis in die Einbaulage eingeführt. Dabei kommt der den Haltebereich des Verbindungselements umschließender Bereich der Kabeltülle unter elastischer radialer Vorspannung sowohl an der radial umlaufenden Mantelfläche des Haltebereichs als auch an der radial umlaufenden Innenfläche der Stufenöffnung zur dichtenden Anlage.

Dieser Montageablauf ist einfach durchführbar.

Da die Dichtstelle zwischen der Kabeltülle und der Stufenöffnung sich nahe der Mündung der Stufenöffnung nach außen befindet, kann an dieser Mündung der Stufenöffnung einfach kontrolliert werden, ob diese Dichtstelle auch wirklich dicht ist. Durch die Sichtbarkeit einer Undichtheit von außen kommt es auch zu einer Reduzierung von Reklamationskosten,

Die gleiche Ausgestaltung von Stufenöffnung, Verbindungselement und Kabeltülle bei ansonsten unterschiedlichen Endverschlüssen ermöglicht kostensparende Gleichteile bei den verschiedensten Linearstellvorrichtungen.

Der Übergang von der von der kleinen Stufe der Stufenöffnung zur großen Stufe kann jede geeignete Form aufweisen. So z.B. ist ein rechtwinkliger Übergang aber auch ein konusförmiger Übergang möglich.

Vorzugsweise besteht die Kabeltülle aus einem elastischen Werkstoff, so daß keine zusätzlichen Dichtelemente benötigt werden.

Auf zusätzliche Verbindungselemente kann verzichtet werden, wenn die Kabeltülle formschlüssig mit dem Verbindungselement verbindbar und damit auch eine Montage einfach ist.

Dazu kann der Haltebereich des Verbindungselements an seiner radial umlaufenden Mantelfläche eine radial umlaufende Haltenut aufweisen, in die ein radial nach innen ragender Ringansatz der Kabeltülle ragt.

Weist die Kabeltülle an ihrem in die große Stufe der Stufenöffnung ragenden Bereich einen radial umlaufenden, radial nach außen hervorragenden Dichtwulst auf, so ist der Bereich des Dichtwulstes besonders elastisch und sorgt für eine erhöhte Dichtwirkung.

Zur einfachen Anordnung des Verbindungselements in seine Einbaulage kann der in die große Stufe der Stufenöffnung ragende Haltebereich des Verbindungselements eine flanschartige Erweiterung aufweisen, die axial an einer Ringfläche am Übergang von der kleinen Stufe zur großen Stufe der Stufenöffnung anliegbar ist.

Ist an einem in den Gehäuseinnenraum ragenden Endbereich des Zapfenstücks des Verbindungselements ein widerhakenartiger Sperransatz angeordnet, der bei Einführen des Zapfenstücks in die kleine Stufe der Stufenöffnung an die Mantelfläche des Zapfenstücks anklappbar ist und der in der Einbaulage des Verbindungselements elastisch radial nach außen geklappt ist.

Dadurch hintergreift der Sperransatz in der Einbaulage des Verbindungselements den gehäuseinnenraumseitigen Mündungsbereich der kleinen Stufe der Stufenöffnung und sichert das Verbindungselement gegen ungewolltes Lösen aus seiner Einbaulage. Es ist dann nicht möglich das Verbindungselement ausschließlich durch axiale Kraftbeaufschlagung aus der Stufenöffnung herauszuziehen, ohne dabei den Sperransatz abzutrennen. Damit ist das Verbindungselement sicher von außen an dem Endverschluß montierbar.

Weist das Verbindungselement einen ganz oder teilweise von einem symmetrischen Querschnitt abweichenden Querschnitt auf und weist die Stufenöffnung einen entsprechenden ganz oder teilweise von einem symmetrischen Querschnitt abweichenden Querschnitt auf, so kann das Verbindungselement nur in einer bestimmten Ausrichtung an den Endverschluß montiert werden.
Je nach den vorgegebenen Einbauverhältnissen der Linearstellvorrichtung kann die Stufenöffnung sich in einem Winkelbereich zwischen 0° und 90° zu einer Längsachse der Linearstellvorrichtung erstrecken.

Dies ist von besonderem Vorteil, wenn der Endverschluß ein Anschlußstück aufweist, so daß zur leichteren Montage von Verbindungselement und Kabeltülle die Kabeltülle und das Anschlußstück in unterschiedliche Richtungen ausgerichtet werden können.

Das Anschlußstück, das eine Kugelpfanne sein kann, kann in Bezug auf die Ausrichtung der montierten Kabeltülle unter einem Winkel zwischen 90° und 270°, vorzugsweise um einen Winkel von 180° ausgerichtet sein.

Vorzugsweise ist die Linearstellvorrichtung ein Spindeltrieb, dessen Spindelantriebsmotor in dem Gehäuseinnenraum angeordnet und mit dem Kabel kontaktiert ist.

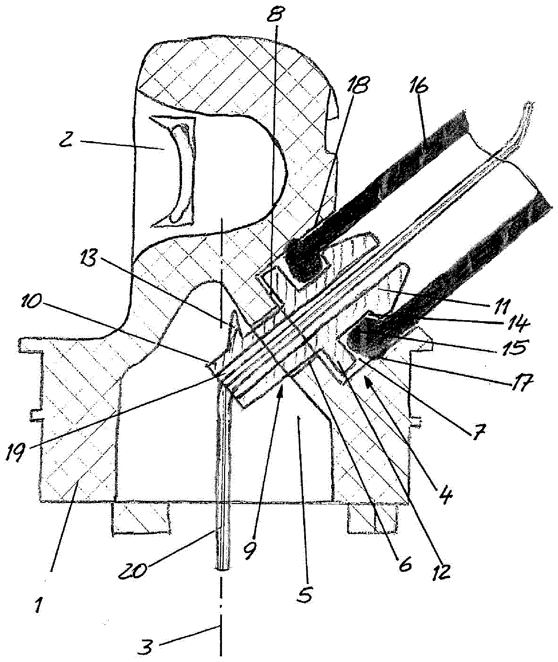

Ein Ausführungsbeispiel der Erfindung ist in der Zeichnung dargestellt und wird im Folgenden näher beschrieben. Die einzige Figur der Zeichnung zeigt eine Kabeldurchführanordnung im Längsschnitt.

Die in der Figur dargestellte Kabeldurchführanordnung weist einen Endverschluß 1 für ein rohrartiges Gehäuse auf, das ein Bodenstück bildet. In dem nicht dargestellten Gehäuse ist ein Elektromotor für einen eine Linearstellvorrichtung bildenden Spindeltrieb angeordnet.

In dem Endverschluß 1 ist eine ein Anschlußstück 2 bildende Kugelpfanne ausgebildet, die rechtwinklig zur Längsachse 3 des Gehäuses ausgerichtet ist.

Um 180° zur Ausrichtung des Anschlußstücks 2 ausgerichtet und um 45° zur Längsachse 3 geneigt, ist in dem Endverschluß eine Stufenöffnung 4 ausgebildet, die eine in den Gehäuseinnenraum 5 des Gehäuses mündende kleine Stufe 6 geringeren Querschnitts und eine nach außen führende große Stufe 7 größeren Querschnitts aufweist.

Eine sich rechtwinklig zur Längsachse der Stufenöffnung 4 sich erstreckende Ringfläche 8 bildet einen Übergang von der kleinen Stufe 6 zur großen Stufe 7.

In die Stufenöffnung ist ein Verbindungselement 9 eingesetzt, das ein die kleine Stufe 6 der Stufenöffnung 4 durchragendes Zapfenstück 10, einen die große Stufe 7 der Stufenöffnung 4 durchragenden Haltebereich 11 und eine flanschartige Erweiterung 12 aufweist, die in der großen Stufe 7 an der Ringfläche 8 des Endverschlusses 1 in Anlage ist.

An dem in den Gehäuseinnenraum 5 ragenden Bereich des Zapfenstücks 10 ist ein widerhakenartiger Sperransatz 13 ausgebildet, der aus seiner radial nach außen geklappten Sperrposition elastisch zum Haltebereich 11 hin klappbar ist. Dies erfolgt bei der Montage des Verbindungselements 9, wenn dieses von außen her durch die kleine Stufe 6 der Stufenöffnung 4 hindurch bis in seine Einbaulage geführt wird. Ist der Sperransatz 13 dann vollständig im Gehäuseinnenraum 5 angelangt und die flanschartige Erweiterung 12 an der Ringfläche 8 in Anlage, klappt er aufgrund seiner Elastizität radial nach außen und verhindert eine Demontage des Verbindungselements 9.

Anschließend an die flanschartige Erweiterung 12 ist an der radial umlaufenden Mantelfläche des Haltebereichs 11 eine radial umlaufende Haltenut 14 ausgebildet, in die ein Ringansatz 15 an einem Ende einer aus einem elastischen Material bestehenden Kabeltülle 16 hineinragt und mit Vorspannung am Boden der Haltenut 14 in Anlage ist.

Die Kabeltülle 16 weist weiterhin im Bereich des Ringansatzes 15 radial umlaufend nach außen hervorstehend einen Dichtwulst 17 auf, der an der radial umlaufenden Innenwand 18 der großen Stufe 7 mit Vorspannung in Anlage ist.

Durch die Anlage des Ringansatzes 15 mit elastischer Vorspannung an dem Boden der Haltenut 14 sowie die Anlage des Dichtwulstes 17 mit elastischer Vorspannung an der Innenwand 18 der großen Stufe 7 ist das Verbindungselement 9 abgedichtet in der Stufenöffnung 4 angeordnet und der Gehäuseinnenraum 5 nach außen hin abgedichtet.

Das Verbindungselement 9 weist eine axiale Durchgangsbohrung 19 auf. Durch die Kabeltülle 16 und die Durchgangsbohrung 19 im Verbindungselement 9 sind ein oder mehrere Kabel 20 dicht von außen in den Gehäuseinnenraum 5 geführt und können dort mit dem Spindelantriebsmotor verbunden sein.

### Bezugszeichenliste

- 1: Endverschluß
- 2: Anschlußstück
- 3: Längsachse
- 4: Stufenöffnung
- 5: Gehäuseinnenraum
- 6: kleine Stufe
- 7: große Stufe
- 8: Ringfläche
- 9: Verbindungselement
- 10: Zapfenstück
- 11: Haltebereich
- 12: flanschartige Erweiterung
- 13: Sperransatz
- 14: Haltenut
- 15: Ringansatz
- 16: Kabeltülle
- 17: Dichtwulst
- 18: Innenwand
- 19: Durchgangsbohrung
- 20: Kabel

## Patentansprüche

1. Kabeldurchführanordnung mit einem Endverschluß (1) einer elektromotorischen Linearstellvorrichtung, wobei ein Kabel (20) von außen durch eine Einführöffnung in dem Endverschluß (1) der elektromotorischen Linearstellvorrichtung in einen Gehäuseinnenraum (b) der Linearstellvorrichtung ist, **dadurch gekennzeichnet**, wobei die Einführöffnung eine Stufenöffnung (4) ist, die an ihrem dem Genauseinnenraum (5) nahen Bereich eine kleine Stufe (6) mit geringerer radialer Erstreckung und in ihrem nach außen mündenden Bereich eine große Stule (7) mit größerer radialer Erstreckung aufweist, mit einem eine axiale Durchgangsöffnung (19) aufweisenden Verbindungselement (9), das von außen bis in eine Einbaulage in die Einführöffnung einführbar und in der Einbaulage fixierbar ist, wobei das Verbindungselement (9) in seiner Einbaulage mit einem axialen Zapfenstück (10) durch die kleine Stufe (6) der Stufenöffnung (4) in den Gehäuseinnenraum (5) ragt und mit einem axialen Haltebereich (11) in die große Stufe (7) der Stufenöffnung (4) ragt oder die große Stufe (7) der Stufenöffung (4) durchragt, sowie mit einer Kabeltülle (16), durch die das durch Durchgangsöffnung (19) des Vervindungselements (9) führbare Kabel (20) nach außen führbar ist und die mit ihrem einem Ende den Haltebereich (11) umschließt und mit elastischer Vorspannung radial umlaufend sowohl an der radial umlaufenden Mantelfläche des Haltebereichs (11) als auch an der radial umlaufenden Innenfläche (18) der großen Stufe (7) der Stufenöffnung (4) in Anlage ist, wobei das Kabel (20) zunächst vom Gehäuseinnenraum (5) durch die Einführöffnung des Endverschlusses (1) nach außen und weiter durch die Durchgangsöffnung (19) des Verbindungselements (9) sowie die Kabeltülle (16) hindurchführbar ist.

2. Kabeldurchführanordnung nach Anspruch 1, **dadurch gekenn** - **zeichnet**, daß die Kabeltülle (16) aus einem elastischen Werkstoff besteht.

3. Kabeldurchführanordnung nach einem der vorhergehenden Ansprüche, **dadurch gekennzeichnet, daß** die Kabeltülle (16) formschlüssig mit dem Verbindungselement (9) verbindbar ist.

4. Kabeldurchführanordnung nach Anspruch 3, **dadurch gekennzeichnet, daß** der Haltebereich (11) des Verbindungselements (9) an seiner radial umlaufenden Mantelfläche eine radial umlaufende Haltenut (14) aufweist, in die ein radial nach innen ragender Ringansatz (15) der Kabeltülle (16) ragt.

5. Kabeldurchführanordnung nach einem der vorhergehenden Ansprüche, **dadurch gekennzeichnet, daß** die Kabeltülle (16) an ihrem in die große Stufe (7) der Stufenöffnung (4) ragenden Bereich einen radial umlaufenden, radial nach außen hervorragenden Dichtwulst (17) aufweist.

6. Kabeldurchführanordnung nach einem der vorhergehenden Ansprüche, **dadurch gekennzeichnet, daß** der in die große Stufe (7) der Stufenöffnung (4) ragende Haltebereich (11) des Verbindungselements (9) eine flanschartige Erweiterung (12) aufweist, die axial an einer Ringfläche (8) am Übergang von der kleinen Stufe (6) zur großen Stufe (7) der Stufenöffnung (4) anliegbar ist.

7. Kabeldurchführanordnung nach einem der vorhergehenden Ansprüche, **dadurch gekennzeichnet, daß** an einem in den Gehäuseinnenraum (5) ragenden Endbereich des Zapfenstücks (10) des Verbindungselements (9) ein widerhakenartiger Sperransatz (13) angeordnet ist, der bei Einführen des Zapfenstücks (10) in die kleine Stufe (6) der Stufenöffnung (4) an die Mantelfläche des Zapfenstücks(10) anklappbar ist und der in der Einbaulage des Verbindungselements (9) elastisch radial nach außen geklappt ist.

8. Kabeldurchführanordnung nach einem der vorhergehenden Ansprüche, **dadurch gekennzeichnet, daß** das Verbindungselement einen ganz oder teilweise von einem symmetrischen Querschnitt abweichenden Querschnitt aufweist und die Stufenöffnung einen entsprechenden ganz oder teilweise von einem symmetrischen Querschnitt abweichenden Querschnitt aufweist.

9. Kabeldurchführanordnung nach einem der vorhergehenden Ansprüche, **dadurch gekennzeichnet, daß** die Stufenöffnung (4) sich in einem Winkelbereich zwischen 0° und 90° zu einer Längsachse (3) der Linearstellvorrichtung erstreckt.

10. Kabeldurchführanordnung nach einem der vorhergehenden Ansprüche, **dadurch gekennzeichnet, daß** der Endverschluß (1) ein Anschlußstück (2) aufweist.

11. Kabeldurchführanordnung nach einem der vorhergehenden Ansprüche, **dadurch gekennzeichnet, daß** die Linearstellvorrichtung ein Spindeltrieb ist, dessen Spindelantriebsmotor in dem Gehäuseinnenraum (5) angeordnet und mit dem Kabel (20) kontaktiert ist.

## Claims

1. Cable-feedthrough arrangement having an end closure (1) of an electromotive linear-actuating device, wherein a cable (20) can be guided from the outside, through an introduction opening in the end closure (1) of the electromotive linear-actuating device, into a housing interior (5) of the linear-actuating device, wherein the introduction opening is a stepped opening (4) which, in its region in the vicinity of the housing interior (5), has a small step (6) with a relatively small radial extent and, in its region which opens out in the outward direction, has a large step (7) with a relatively large radial extent, having a connecting element (9), which has an axial through-passage opening (19) and which can be introduced into the introduction opening from the outside until it reaches an installation position, and which can be fixed in the installation position, wherein, in its installation position, the connecting element (9) has an axial stub piece (10) projecting through the small step (6) of the stepped opening (4) into the housing interior (5) and has an axial retaining region (11) projecting into the large step (7) of the stepped opening (4), or projecting through the large step (7) of the stepped opening (4), and having a cable bushing (16), through which the cable (20), which can be guided through the through-passage opening (19) of the connecting element (9), can be guided in the outward direction and which has its one end enclosing the retaining region (11) and butting in a radially encircling manner, with elastic prestressing, both against the radially encircling lateral surface of the retaining region (11) and against the radially encircling inner surface (18) of the large step (7) of the stepped opening (4), wherein the cable (20) can be guided first of all from the housing interior (5), through the introduction opening of the end closure (1), in the outward direction and onwards through the through-passage opening (19) of the connecting element (9) and also through the cable bushing (16).

2. Cable-feedthrough arrangement according to Claim 1, **characterized in that** the cable bushing (16) consists of an elastic material.

3. Cable-feedthrough arrangement according to either of the preceding claims, **characterized in that** the cable bushing (16) can be connected in a form-fitting manner to the connecting element (9).

4. Cable-feedthrough arrangement according to Claim 3, **characterized in that** the retaining region (11) of the connecting element (9), on its radially encircling lateral surface, has a radially encircling retaining groove (14), into which a radially inwardly projecting annular extension (15) of the cable bushing (16) projects.

5. Cable-feedthrough arrangement according to one of the preceding claims, **characterized in that**, in its region which projects into the large step (7) of the stepped opening (4), the cable bushing (16) has a radially encircling, radially outwardly projecting sealing bead (17).

6. Cable-feedthrough arrangement according to one of the preceding claims, **characterized in that** the retaining region (11) of the connecting element (9), said retaining region projecting into the large step (7) of the stepped opening (4), has a flange-like widened portion (12), which can be made to butt axially against an annular surface (8) at the transition from the small step (6) to the large step (7) of the stepped opening (4).

7. Cable-feedthrough arrangement according to one of the preceding claims, **characterized in that** an end region of the stub piece (10) of the connecting element (9) which projects into the housing interior (5) has arranged on it a barb-like blocking extension (13) which, when the stub piece (10) is introduced into the small step (6) of the stepped opening (4), can be swung against the lateral surface of the stub piece (10) and, in the installation position of the connecting element (9), is in a state in which it has been elastically swung in the radially outward direction.

8. Cable-feedthrough arrangement according to one of the preceding claims, **characterized in that** the connecting element has a cross section which differs wholly or partially from a symmetrical cross section, and the stepped opening has a corresponding cross section which differs fully or partially from a symmetrical cross section.

9. Cable-feedthrough arrangement according to one of the preceding claims, **characterized in that** the stepped opening (4) extends in an angle range between 0° and 90° in relation to a longitudinal axis (3) of the linear-actuating device.

10. Cable-feedthrough arrangement according to one of the preceding claims, **characterized in that** the end closure (1) has a connection piece (2).

11. Cable-feedthrough arrangement according to one of the preceding claims, **characterized in that** the linear-actuating device is a spindle drive of which the spindle-drive motor is arranged in the housing interior (5) and is in contact with the cable (20).

## Revendications

1. Arrangement de passage de câble comprenant une fermeture d'extrémité (1) d'un dispositif de réglage linéaire électromotorisé, un câble (20) pouvant être introduit depuis l'extérieur dans un espace intérieur de boîtier (5) du dispositif de réglage linéaire électromotorisé à travers une ouverture d'introduction de la fermeture d'extrémité (1) du dispositif de réglage linéaire électromotorisé, l'ouverture d'introduction étant une ouverture étagée (4) qui possède, au niveau de sa zone proche de l'espace intérieur de boîtier (5), un petit étage (6) ayant une extension radiale plus petite et, dans sa zone qui débouche vers l'extérieur, un grand étage (7) ayant une extension radiale plus grande, comprenant un élément de liaison (9) qui possède une ouverture de passage (19), lequel peut être introduit depuis l'extérieur jusque dans une position montée dans l'ouverture d'introduction et peut être calé dans la position montée, l'élément de liaison (9) dans sa position montée faisant saillie dans l'espace intérieur de boîtier (5) avec une pièce de pivot (10) axiale à travers le petit étage (6) de l'ouverture étagée (4) et faisant saillie dans le grand étage (7) de l'ouverture étagée (4) avec une zone de maintien (11) axiale ou traverse le grand étage (7) de l'ouverture étagée (4), et comprenant également un passe-câble (16) à travers lequel le câble (20) qui peut être passé à travers l'ouverture de passage (19) de l'élément de liaison (9) peut être acheminé vers l'extérieur et lequel entoure la zone de maintien (11) avec l'une de ses extrémités et prend appui avec précontrainte élastique et de manière circulaire dans le sens radial à la fois contre l'enveloppe circonférentielle radiale de la zone de maintien (11) et contre la surface interne (18) circonférentielle radiale du grand étage (7) de l'ouverture étagée (4), le câble (20) pouvant initialement être passé de l'espace intérieur de boîtier (5) à travers l'ouverture d'introduction de la fermeture d'extrémité (1) vers l'extérieur et ensuite à travers l'ouverture de passage (19) de l'élément de liaison (9) ainsi que du passe-câble (16).

2. Arrangement de passage de câble selon la revendication 1, **caractérisé en ce que** le passe-câble (16) se compose d'un matériau élastique.

3. Arrangement de passage de câble selon l'une des revendications précédentes, **caractérisé en ce que** le passe-câble (16) peut être relié à l'élément de liaison (9) par complémentarité de formes.

4. Arrangement de passage de câble selon la revendication 3, **caractérisé en ce que** la zone de maintien (11) de l'élément de liaison (9) possède, sur son enveloppe circonférentielle radiale, une rainure de maintien (14) circonférentielle radiale dans laquelle fait saillie vers l'intérieur dans le sens radial un appendice annulaire (15) du passe-câble (16).

5. Arrangement de passage de câble selon l'une des revendications précédentes, **caractérisé en ce que** le passe-câble (16) possède, au niveau de sa zone qui fait saillie dans le grand étage (7) de l'ouverture étagée (4), un bourrelet d'étanchéité (17) circonférentiel radial qui fait saillie dans le sens radial vers l'extérieur.

6. Arrangement de passage de câble selon l'une des revendications précédentes, **caractérisé en ce que** la zone de maintien (11) de l'élément de liaison (9) qui fait saillie dans le grand étage (7) de l'ouverture étagée (4) possède un élargissement (12) de type bride qui peut être appliqué dans le sens axial contre une surface annulaire (8) au niveau de la transition du petit étage (6) vers le grand étage (7) de l'ouverture étagée (4).

7. Arrangement de passage de câble selon l'une des revendications précédentes, **caractérisé en ce qu'**un appendice de blocage (13) de type ardillon est disposé dans une zone d'extrémité, qui fait saillie dans l'espace intérieur de boîtier (5), de la pièce de pivot (10) de l'élément de liaison (9), lequel, lors de l'introduction de la pièce de pivot (10) dans le petit étage (6) de l'ouverture étagée (4), peut être rabattu contre l'enveloppe de la pièce de pivot (10) et lequel, dans la position montée de l'élément de liaison (9), est rabattu élastiquement dans le sens radial vers l'extérieur.

8. Arrangement de passage de câble selon l'une des revendications précédentes, **caractérisé en ce que** l'élément de liaison présente une section transversale entièrement ou partiellement différente d'une section transversale symétrique et l'ouverture étagée présente une section transversale correspondante entièrement ou partiellement différente d'une section transversale symétrique.

9. Arrangement de passage de câble selon l'une des revendications précédentes, **caractérisé en ce que** l'ouverture étagée (4) s'étend dans une plage angulaire entre 0° et 90° par rapport à l'axe longitudinal (3) du dispositif de réglage linéaire.

10. Arrangement de passage de câble selon l'une des revendications précédentes, **caractérisé en ce que** la fermeture d'extrémité (1) possède une pièce de raccordement (2).

11. Arrangement de passage de câble selon l'une des revendications précédentes, **caractérisé en ce que** le dispositif de réglage linéaire est un actionneur à vis sans fin dont le moteur d'entraînement de vis sans fin est disposé dans l'espace intérieur de boîtier (5) et mis en contact avec le câble (20).
